# EUROPÄISCHE PATENTSCHRIFT

(11) **EP 3 361 244 B1**
(45) Veröffentlichungstag und Bekanntmachung des Hinweises auf die Patenterteilung: **14.09.2022**
(21) Anmeldenummer: 17155772.1
(22) Anmeldetag: 13.02.2017
(51) Int. Cl.: G01N 27/407

(54) **SENSOR ZUR ANALYSE VON GASEN UND VERFAHREN ZUM HERSTELLEN DES SENSORS**
SENSOR FOR ANALYSING GASES AND METHOD OF MANUFACTURING THE SENSOR
CAPTEUR D'ANALYSE DE GAZ ET PROCÉDÉ DE FABRICATION DU CAPTEUR

(43) Veröffentlichungstag der Anmeldung: 15.08.2018
(73) Patentinhaber: Heraeus Nexensos GmbH, 63801 Kleinostheim (DE)
(72) Erfinder: Teusch, Dieter, 63486 Bruchköbel (DE); Dietmann, Stefan, 63755 Alzenau (DE); Muziol, Matthias, 63533 Mainhausen (DE)
(74) Vertreter: Heraeus IP

(56) Entgegenhaltungen:
- EP-A2- 0 932 039
- DE-A1-102007 018 001
- US-A- 3 920 172
- US-A- 4 399 017

## Beschreibung

Die vorliegende Erfindung betrifft einen Sensor zur Analyse von Gasen gemäß dem Oberbegriff des Patentanspruchs 1. Auch betrifft die vorliegende Erfindung ein Verfahren zum Herstellen eines Sensors.

Aus dem Stand der Technik sind verschiedenste Sensoren zur Analyse von Gasen bekannt. Derartige Sensoren werden oft in einem Abgasstrang von Verbrennungskraftmaschinen, beispielsweise als Rußsensoren, eingesetzt. Diese Sensoren sind hohen Belastungen hinsichtlich Temperatur, Erschütterungen und Korrosion ausgesetzt. Daher ist es für die Funktion des Sensors notwendig, dass das in dem Sensor verwendete Sensorelement, üblicherweise ein Sensorstreifen auf Keramiksubstrat, mechanisch stabil und gasdicht in einem Gehäuse des Sensors gehalten wird.

Oftmals werden daher Sensorstreifen auf Keramiksubstrat in Rußsensoren mittels "dry pressed powder packing" in einem Gehäuse fixiert. Beispielsweise beschreibt die US 2016/0273944 A1 einen derartigen Sensor, der ein Sensorelement aufweist, das von einem gepressten mineralischen Pulver umgeben ist und von dem mineralischen Pulver gehalten wird. Ein alternativer Aufbau mit Keramikformteilen statt mineralischem Pulver wird in den Dokumenten DE 197 07 456 A1 und DE 10 2007 018 001 A1 beschrieben. Das Sensorelement wird hier in einer Längsbohrung eines Gehäuses des Sensors mittels zweier Keramikformteile mechanisch gehalten und mittels einer Glasdichtung gasdicht nur zum Keramikformteil abgeschlossen, jedoch nicht gegen Feuchtigkeit zum Gehäuse. Weitere Sensoren werden in den Dokumenten US 3920172 und US 4399017 beschrieben.

Allerdings haben die aus dem Stand der Technik bekannten Lösungen den Nachteil, dass die "dry pressed powder packing" Bauweise eine Ansammlung von Feuchte im hinteren Bereich des Sensors zulässt. Der durch die Feuchte verursachte Isolationsverlust kann zu Fehlmessungen führen. Auch können die Sensorelemente beim Zusammenpressen des Pulvers beschädigt werden. Beim Einsetzen des Sensorelements mittels Glaslot in ein Keramikformteil, kann das Glaslot teilweise die Anschlussmittel des Sensorelements, zum Beispiel die Anschlussdrähte, beschädigen. Weiterhin wird hierdurch die Einsatztemperatur des Sensors limitiert. Wegen der mechanisch "harten" Einspannung des Sensorelements in dem Keramikformteil, kann das Sensorelement beschädigt werden. Im schlimmsten Fall kann es zu einem Sensorbruch kommen.

Aufgabe der vorliegenden Erfindung ist es daher, einen verbesserten Sensor bereitzustellen, der die Nachteile des Stands der Technik überwindet. Insbesondere einen hochtemperaturfesten Sensor bereitzustellen mit:
einer verbesserten Abdichtung des Anschlussbereichs,
einer verbesserten Entkopplung des Sensorelements gegen mechanische Belastungen,
einer verbesserten Temperaturwechselbeständigkeit,
einer verbesserten Medienbeständigkeit, und
einer verbesserten Einbaubarkeit.

Diese Aufgabe wird erfindungsgemäß durch einen Sensor gemäß des Gegenstands des Patentanspruchs 1 gelöst.

Der Begriff "Analyse von Gasen" kann beispielsweise verwendet werden, um eine Bestimmung, bzw. Erfassung von Rußpartikeln in den Abgasen eines Kraftfahrzeugs zu bezeichnen. Weiterhin kann eine "Analyse von Gasen" auch die Erfassung einer Temperatur eines Gases, bzw. von Abgasen umfassen. Weiterhin kann eine "Analyse von Gasen" auch die Erfassung der chemischen Zusammensetzung eines Gases, bzw. von Abgasen umfassen." Unter dem Begriff "Gehäuse" kann ein Halter für das Sensorelement verstanden werden, der mit dem Sensorelement in Verbindung steht.

Die Begriffe "erste Öffnung" und "zweite Öffnung" können dazu verwendet werden, gegenüberliegende Öffnungen, bzw. gegenüberliegende Bereiche mit einer Materialaussparung an dem Gehäuse oder in der Oberfläche des Gehäuses zu beschreiben. Beispielsweise kann das Sensorelement in dem Gehäuse angeordnet sein und sich aus der ersten und/oder zweiten Öffnung erstrecken, bzw. aus den Öffnungen hinausragen. Hierfür können die Öffnungen beispielsweise größer sein, als ein Durchmesser des Sensorelements.

Weiterhin kann beispielsweise der Begriff "erste Öffnung" dazu verwendet werden, um eine Öffnung nahe eines Anschlussbereichs oder an dem Anschlussbereich des Sensors und/oder Sensorelements zu beschreiben und der Begriff "zweite Öffnung" kann dazu verwendet werden, um eine Öffnung nahe eines Messbereichs oder an dem Messbereich des Sensors und/oder Sensorelements zu beschreiben.

Der Begriff "zumindest bereichsweise vollständig umgeben" kann verwendet werden um zu beschreiben, dass zumindest die Außenfläche des Sensorelements in einem Längsabschnitt des Sensorelements vollständig, bzw. um 360° von dem jeweiligen Element umgeben ist. Weiterhin kann der Begriff "formschlüssig zu fixieren" dazu verwendet werden um eine nicht lösbare Verbindung zwischen dem Sensorelement und dem Vergusselement zu beschreiben.

Auch kann, beispielsweise, abhängig von der Zusammensetzung des verwendeten Vergusselements, das Vergusselement angepasst sein das Sensorelement in dem Gehäuseinnenraum formschlüssig und stoffschlüssig zu fixieren.

Der Begriff "stoffschlüssig" beschreibt eine Verbindung bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen.

Der Erfindung liegt somit die überraschende Erkenntnis zu Grunde, dass eine verbesserte Abdichtung des Anschlussbereichs des Sensors erreicht werden kann. Gleichzeitig werden die mechanischen Belastungen auf das Sensorelement bei der Herstellung und bei der Verwendung des Sensors reduziert. Weiterhin können durch das Vergusselement, die auf das Sensorelement einwirkenden Kräfte von dem Glaselement ferngehalten werden. Auch ermöglicht der erfindungsgemäße Sensor den Einsatz von kürzeren Sensorelementen, beispielsweise kürzeren Sensorstreifen, was eine Material- und Kostenersparnis mit sich bringt.

Mit der Erfindung ist es erstmalig gelungen eine Verbindung zu schaffen, die zu einer verbesserten Verkapselung des Sensors führt. Das Glaselement übernimmt im kälteren Bereich die Abdichtfunktion und wird durch das Vergusselement gestützt. Das Eindringen von Feuchtigkeit durch die erste Öffnung des Gehäuses wird dadurch verhindert. Das Vergusselement ist hoch temperaturbeständig und übernimmt die mechanische Befestigung des Sensorstreifens, ohne den Sensorstreifen mechanisch zu beschädigen.

In einem Beispiel sind das Vergusselement und das Glaselement formschlüssig und/oder stoffschlüssig aneinander fixiert.

Diese Anordnung steigert die Stabilität und Haltbarkeit des Sensors. Auch kann eine formschlüssige und/oder stoffschlüssige Verbindung zwischen allen Komponenten des Sensorelements realisiert werden, also eine formschlüssige und/oder stoffschlüssige Verbindung von dem Gehäuse, dem Vergusselement, dem Glaselement und dem Sensorelement.

In einem weiteren Beispiel ragt/ragen zumindest ein Endbereich/Endbereiche des Sensorelements zumindest teilweise aus der ersten Öffnung und/oder der zweiten Öffnung hinaus.

In einem weiteren Beispiel umfasst das Gehäuse zumindest einen Anschlussflansch.

Der Anschlussflansch kann beispielsweise ein flacher Steg sein, der um das Gehäuse angeordnet ist und/oder mit dem Gehäuse einstückig ausgebildet ist.

In dem vorgenannten Beispiel kann der Sensor weiterhin zumindest ein erstes Anbauteil aufweisen, wobei das erste Anbauteil angepasst ist das Sensorelement an der ersten Öffnung zu umgeben, und/oder der Sensor weist zumindest ein zweites Anbauteil auf, wobei das zweite Anbauteil angepasst ist das Sensorelement an der zweiten Öffnung zu umgeben, und wobei das erste Anbauteil und/oder das zweite Anbauteil an dem Anschlussflansch befestigt sind, insbesondere mit dem Anschlussflansch verschweißt sind.

Hier kann der Begriff "Umgeben" auch gleichbedeutend mit "Abdecken" oder "Kapseln" verwendet werden. Beispielsweise können das erste und das zweite Anbauteil jeweils auch eine Komponente einer Abgasanlage sein.

Vorteilhaft kann der Anschlussflansch dazu verwendet werden, um weitere Anbauteile an dem Sensorgehäuse anzuordnen. Beispielsweise können die weiteren Anbauteile mit dem Flansch verschweißt werden. Weiter vorteilhaft bewirkt der Flansch als "Feder" eine mechanische Entkopplung.

In einem weiteren Beispiel weist das Gehäuse eine Metallhülse, insbesondere eine Tiefziehhülse, auf, bevorzugt weist die Metallhülse eine Verjüngung an der ersten Öffnung auf. Eine solche Ausgestaltung ermöglicht eine einfachere und kostengünstige Herstellung, sowie kleinere Abmessungen des resultierenden Sensors.

In einem Beispiel weist das Gehäuse eine Kobaltlegierung, insbesondere eine Nickel-Kobaltlegierung umfassend Alloy 605, auf, und/oder
das Gehäuse weist eine Wandstärke von 0,2mm bis 0,6mm auf.

Diese Materialwahl ermöglicht eine gute Verarbeitbarkeit, sowie eine gute Hitzebeständigkeit des Sensorgehäuses.

Vorteilhaft bewirkt die geringe Materialstärke eine weichere Einspannung im Komplettfühler.

In einem weiteren Beispiel weist das Glaselement ein Glaslot auf. Das Glaslot bewirkt vorteilhaft, dass das Sensorelement in Richtung und/oder an der ersten Öffnung hermetisch, also luftdicht abgedichtet werden kann und keine Feuchte eindringt. Vorteilhafterweise ist das Glaslot ausdehnungsangepasst, dichtaufschmelzend, medienresistent und umfasst PbO, Al2O3, SiO2, B2O3 und weitere Bestandteile.

In einem Beispiel weist das Vergusselement einen keramischen Verguss, insbesondere einen ausdehnungsangepassten Verguss auf Aluminiumoxidbasis, auf. Vorteilhaft kann der keramische Verguss die mechanische Befestigung des Sensorelements übernehmen, ohne das Sensorelement zu belasten.

In noch einem weiteren Beispiel weist das Sensorelement auf:
zumindest einen Sensorsteifen umfassend zumindest ein Substrat, insbesondere ein Keramiksubstrat;
zumindest ein Messmittel, insbesondere einen Messwiderstand angeordnet auf dem Substrat; und
zumindest ein Anschlussmittel, bevorzugt sind das Messmittel und/oder das Anschlussmittel zumindest teilweise außerhalb des Gehäuseinnenraums angeordnet.

Beispielsweise kann das Sensorelement, ein Sensorelement eines Rußsensors sein. Hier kann die Basis durch ein Substrat aus einem keramischen Material, z.B. Al2O3 gebildet werden. Auf einer Seite des Substrats kann ein Mäander aufgebracht sein, der als Heizelement dient. Auf der gegenüberliegenden Seite des Substrates können mindestens zwei Elektroden als Messmittel aufgebracht sein. Die beiden Elektroden können beispielsweise als verschlungene Mäander oder als interdigitale Kammstruktur ausgebildet sein. Als Elektrodenmaterial kann im Speziellen Platin verwendet werden, da es elektrisch leitfähig ist und den hohen Temperaturspitzen im Abgas widerstehen kann. Die Anschlussmittel können beispielsweise Anschlussdrähte aus Nickeldraht mit einem Platinmantel umfassen.

In einem weiteren Beispiel kann das Glaselement und das Vergusselement in dem Gehäuseinnenraum in dem Zwischenraum zwischen der Gehäusewand des Gehäuseinnenraums und dem Substrat des Sensorelements angeordnet sein und nur das Substrat des Sensorelements zumindest bereichsweise vollständig umgeben.

Vorteilhaft wird das Anschlussmittel nicht von dem Glaselement umgeben, sondern nur das Substrat des Sensorelements. Somit kann das Glaselement, beispielsweise das Glaslot, nicht das Anschlussmittel, beispielsweise den Anschlussdraht, angreifen.

In noch einem weiteren Beispiel ist das Sensorelement angepasst als Gassensor, Rußsensor, Lambdasonde, Temperatursensor, Chemosensor oder Strömungssensor oder einer beliebigen Kombination dieser Sensoren und/oder als Heizelement betrieben zu werden.

Vorteilhaft kann der erfindungsgemäße Sensor universell für ein weites Anwendungsgebiet verwendet werden.

Die Erfindung schlägt auch ein Verfahren gemäß Anspruch 13 zur Herstellung eines erfindungsgemäßen Sensors vor.

In einem Beispiel ist das Verfahren dadurch gekennzeichnet, dass das Erhitzen zumindest einen Brennvorgang des Sensors, vorzugsweise in einem Brennofen, umfasst.

Hierbei kann in einem weiteren Beispiel das Vergusselement und das Glaselement mittels des Brennvorgangs an das Gehäuse und an das Sensorelement gesintert und/oder aufgeschmolzen werden.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1a, 1b, 1c: schematische Schnittansichten von aus dem Stand der Technik bekannten Sensoren;
- Figur 2a, 2b: eine schematische Seitenansicht und eine schematische Draufsicht eines Sensorelements gemäß einer Ausführungsform der Erfindung;
- Figur 3: eine schematische Schnittansicht eines Gehäuses gemäß einer Ausführungsform der Erfindung;
- Figur 4a, 4b: eine schematische Schnittansicht und eine perspektivische Ansicht eines Sensors gemäß einer Ausführungsform der Erfindung;
- Figur 5: eine schematische Seitenansicht eines Sensor mit einem daran angeordneten ersten und zweiten Anbauteil gemäß einer Ausführungsform der Erfindung; und
- Figur 6: ein Verfahren zur Herstellung eines Sensors gemäß einer Ausführungsform der Erfindung.

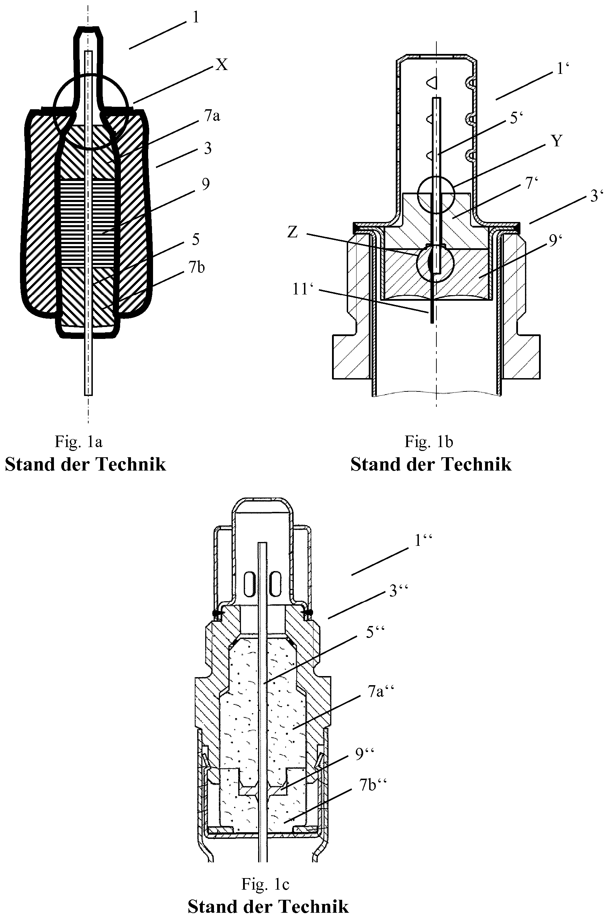

In Figur 1a wird eine schematische Schnittansicht eines aus dem Stand der Technik bekannten Sensors 1 gezeigt. Der beispielhaft gezeigte Sensor 1 weist ein Sensorelement 5, beispielsweise einen Sensorstreifen auf, der mittels "dry pressed powder packing" in einem Gehäuse 3 verbaut ist. In Figur 1a wird gezeigt, dass das Sensorelement 5 von einem verpressten Pulver 9 gehalten wird, das zwischen zwei Keramikscheiben 7a, 7b angeordnet ist. Der hintere Anschlussbereich des Sensors 1 ist mittels eines Kreises "X" hervorgehoben. Wie es bereits erwähnt wurde, kann sich in dem gezeigten Sensor 1a Feuchte durch das verpresste Pulver 9 hindurchdrücken und in den Anschlussbereich des Sensors 1 gelangen.

Figur 1b zeigt eine alternative Ausgestaltung eines aus dem Stand der Technik bekannten Sensors 1', der in dem bereits erwähnten Stand der Technik Dokument US 2016/0273944 A1 beschrieben wird. In der in Figur 1b gezeigten Ausgestaltung wird das Sensorelement 5' von einem Keramikformteil 7' gehalten. Ein Endbereich des Sensorelements 5' mit dem Anschlussmittel 11', beispielsweise einem Anschlussdraht, ist in einem Glaselement 9', beispielsweise in Glaslot vergossen. Die Durchführung des Sensorelements 5' durch das Keramikformteil 7' ist mittels eines Kreises "Y" hervorgehoben. Wie es aus der Figur 1b ersichtlich ist, kann das Sensorelement 5' an die Keramikkante des Keramikformteils 7' anschlagen und brechen. Das eingegossene Anschlussmittel 11' in dem Glaselement 9' wird mittels eines Kreises "Z" hervorgehoben. In dem in Figur 1b gezeigten Sensor 1' kann das Glaselement 9', bzw. das Glaslot, das Anschlussmittel 11' korrosiv angreifen.

Figur 1c zeigt eine weitere Ausgestaltung eines aus dem Stand der Technik bekannten Sensors 1", der in dem bereits erwähnten Stand der Technik Dokument DE 197 07 456 A1 beschrieben wird. In der in Figur 1c gezeigten Ausgestaltung wird das Sensorelement 5" von zwei Keramikformteilen 7a", 7b" gehalten. Zwischen den beiden Keramikformteilten 7a", 7b" ist ein Glaselement 9" angeordnet, das gasdicht zu den Keramikformteilen 7a", 7b" abschließt. Allerdings kann auch in der in Figur 1c gezeigten Ausgestaltung das Sensorelement 5" an den nach außen zeigenden Kanten der Keramikformteile 7a", 7b" anschlagen und brechen. Auch stellt die in Figur 1c gezeigte Ausgestaltung keine stoffschlüssige Dichtung zwischen dem anschlußseitigen Endabschnitt des Sensors 1" und dem Gehäuse 3" zur Verfügung.

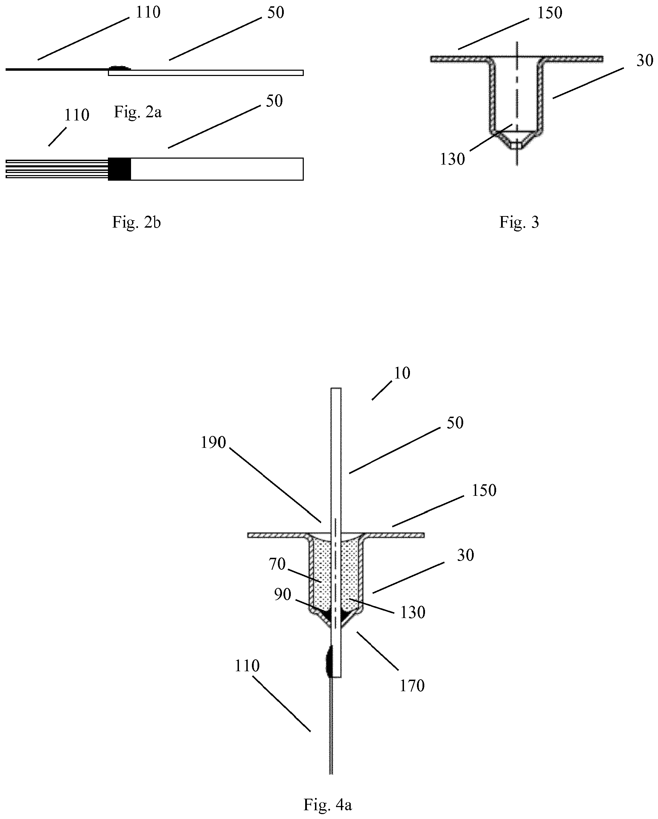

Die Figuren 2a, 2b zeigen eine schematische Seitenansicht und eine schematische Draufsicht eines Sensorelements 50 gemäß einer Ausführungsform der Erfindung. Das in den Figuren 2a und 2b lediglich schematisch gezeigte Sensorelement 50 kann eine Basis aufweisen, die aus einem Substrat aus einem keramischen Material gebildet wird. Beispielsweise kann das Substrat Al2O3 aufweisen, eine Länge von 32mm, eine Breite von 3,6mm und eine Dicke von 1mm haben. Auf einer Seite des Substrats kann ein Mäander aufgebracht sein (nicht gezeigt) und auf der anderen Seite können mindestens zwei Elektroden als Messmittel aufgebracht sein (nicht gezeigt). Der Fachmann weiß aber, dass auch Messmittel mit einem anderen Wirkprinzip verwendet werden können.

Das in den Figuren 2a, 2b gezeigte Sensorelement 50 weist auch Anschlussmittel 110 in Form von Anschlussdrähten auf. Beispielsweise können diese Anschlussdrähte aus Nickeldraht mit Platinmantel gefertigt sein und einen Durchmesser von 0,2mm haben. Der Fachmann weiß aber, dass die Anschlussdrähte auch andere Materialien und/oder andere Querschnitte aufweisen können.

Beispielsweise kann das Sensorelement, ein Sensorelement eines Rußsensors sein. Hier kann die Basis durch ein Substrat aus einem keramischen Material, z.B. Al2O3 gebildet werden. Auf einer Seite des Substrats kann ein Mäander aufgebracht sein, der als Heizelement dient. Auf der gegenüberliegenden Seite des Substrates können mindestens zwei Elektroden als Messmittel aufgebracht sein. Die beiden Elektroden können beispielsweise als verschlungene Mäander oder als interdigitale Kammstruktur ausgebildet sein. Als Elektrodenmaterial kann Platin verwendet werden, da es elektrisch leitfähig ist und den hohen Temperaturspitzen im Abgas widerstehen kann.

Figur 3 zeigt eine schematische Schnittansicht eines Gehäuses 30 gemäß Ausführungsformen der Erfindung. Das in Figur 3 gezeigte Gehäuse 30 umfasst einen Gehäuseinnenraum 130 und weist eine Metallhülse auf, die durch eine Tiefziehhülse gebildet sein kann. Auch kann das Gehäuse 30 eine Kobaltlegierung, insbesondere eine Nickel-Kobaltlegierung umfassend Alloy 605, aufweisen. Wie es aus Figur 3 ersichtlich ist, kann das Gehäuse 30 eine geringe Wandstärke aufweisen, beispielsweise eine Wandstärke in der Region von 0,2mm bis 0,6mm, um dadurch besser verformbar zu sein und eine weichere Einspannung im Komplettfühler zu erreichen.

Das in Figur 3 gezeigte Gehäuse 30 umfasst auch einen Anschlussflansch 150, der sich in horizontaler Richtung ringförmig um die Außenwandung des Gehäuses 30 erstreckt.

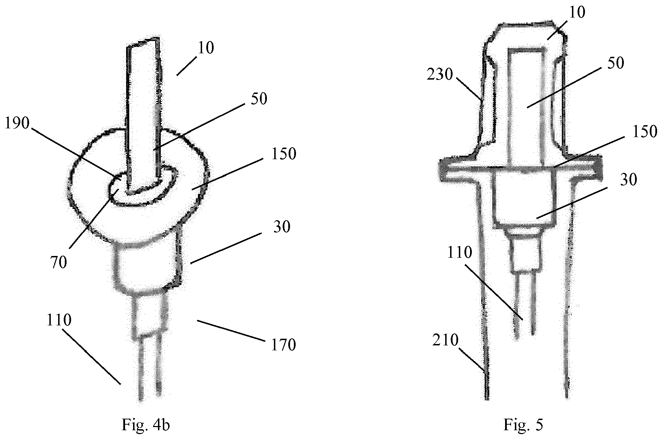

Die Figuren 4a, 4b zeigen eine schematische Schnittansicht und eine perspektivische Ansicht eines Sensors 10 gemäß einer Ausführungsform der Erfindung. In der gezeigten Ausführungsform umfasst der Sensor 10 ein Gehäuse 30, das ein Gehäuse sein kann, wie es in Figur 3 gezeigt wird. Das Gehäuse 30 hat einen Gehäuseinnenraum 130 mit einer ersten Öffnung 170 und einer der ersten Öffnung 170 gegenüberliegenden zweiten Öffnung 190. In der gezeigten Ausführungsform befindet sich an der ersten Öffnung 170 der Anschlussbereich des Sensors 10 mit dem Anschlussmittel 110, das es ermöglicht, dass das Sensorelement 50 an eine Auswerteeinheit (nicht gezeigt) angeschlossen werden kann. An der zweiten Öffnung 190 befindet sich der Messbereich des Sensorelements 50. Das Sensorelement 50 ist zumindest teilweise in dem Gehäuseinnenraum 130 des Gehäuses 30 angeordnet.

Wie es in der Figur 4a gezeigt wird, ist ein Glaselement 90 an und/oder in der ersten Öffnung 170 des Gehäuseinnenraums 130 in dem Gehäuseinnenraum 130 des Gehäuses 30 angeordnet und dichtet den Zwischenraum hermetisch in Richtung der ersten Öffnung 170 ab. Das Glaselement 90 kann deshalb ein Glaslot aufweisen, das durch einen Brennvorgang den Zwischenraum, bzw. Spalt zwischen dem Gehäuse 30 und dem Sensorelement 50 stoffschlüssig abdichtet. Auf dem Glaselement 90 ist ein Vergusselement 70 angeordnet, dass das Glaselement 90 von der dem Gehäuse 30 abgewandten Seiten vollständig umschließt. In der gezeigten Ausführungsform wird das Sensorelement 50 von dem Vergusselement 70 in dem Gehäuseinnenraum 130 des Gehäuses 30 formschlüssig fixiert. Figur 5 zeigt eine schematische Seitenansicht eines Sensor 10 mit einem daran angeordneten ersten und zweiten Anbauteil 210, 230. Wie es in Figur 5 gezeigt wird, ist das erste Anbauteil 210 an der ersten Öffnung 170 des Sensors 10 angeordnet und umgibt den an der ersten Öffnung 170 angeordneten Teil des Sensorelements 50. Das zweite Anbauteil 230 ist an der zweiten Öffnung 190 des Sensors 10 angeordnet und umgibt den an der zweiten Öffnung 190 angeordneten Teil des Sensorelements 50. In der gezeigten Ausführungsform kann das erste Anbauteil 210 und das zweite Anbauteil 230 mit dem Anschlussflansch 150 verschweißt sein. Der Fachmann weiß aber, dass auch alternative Verbindungstechniken, wie beispielsweise ein Verpressen oder Verkleben der beiden Anbauteile 210, 230 am Anschlussflansch 150, angewendet werden können.

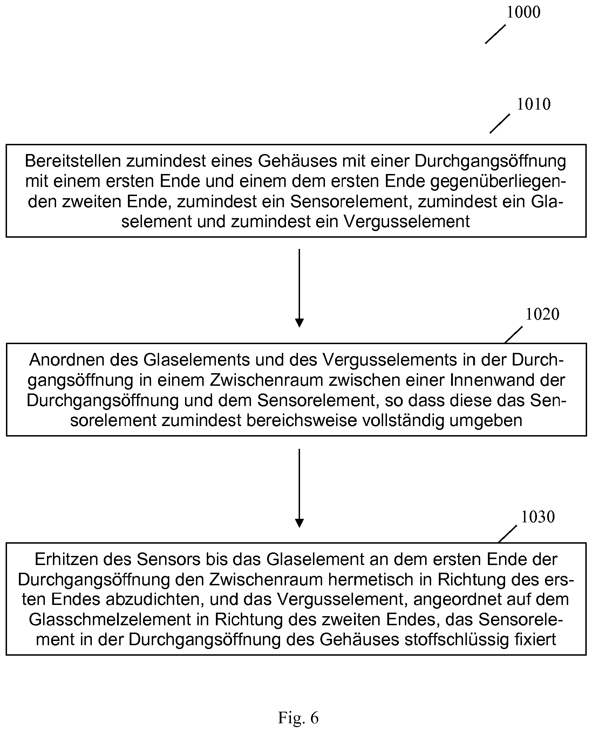

Figur 6 zeigt ein Verfahren 1000 zur Herstellung eines Sensors 10 gemäß einer Ausführungsform der Erfindung. Das Verfahren 1000 weist die nach nachfolgenden Schritte auf:
Bereitstellen 1010 zumindest eines Gehäuses 30 mit einem Gehäuseinnenraum 130 mit einer ersten Öffnung 170 und einer der ersten Öffnung 170 gegenüberliegenden zweiten Öffnung 190, zumindest ein Sensorelement 50, zumindest ein Glaselement 90 und zumindest ein Vergusselement 70;
Anordnen 1020 des Sensorelements 50 zumindest bereichsweise in dem Gehäuseinnenraum 130, wobei das Sensorelement 50 aufweist: zumindest einen Sensorstreifen umfassend zumindest ein Substrat, zumindest ein Messmittel angeordnet auf dem Substrat und zumindest ein Anschlussmittel 110, wobei das Anschlussmittel 110 außerhalb des Gehäuseinnenraums 130 angeordnet ist,
und Anordnen des Glaselements 90 und des Vergusselements 70

in dem Gehäuseinnenraum 130 in einem Zwischenraum zwischen einer Gehäusewand des Gehäuseinnenraums 130 und dem Sensorelement 50, so dass diese das Sensorelement 50 zumindest bereichsweise vollständig umgeben, wobei das Anschlussmittel 110 nicht vom Glaselement 90 umgeben wird und Erhitzen 1030 des Sensors 10 bis das Glaselement 90 an der ersten Öffnung 170 des Gehäuseinnenraums 130 den Zwischenraum hermetisch in Richtung der ersten Öffnung 150 abdichtet, und das Vergusselement 70, angeordnet auf dem Glasschmelzelement in Richtung der zweiten Öffnung 190, das Sensorelement 50 in dem Gehäuseinnenraum 130 des Gehäuses 30 stoffschlüssig fixiert.

Die in der vorstehenden Beschreibung, in den Ansprüchen und in den Figuren dargestellten Merkmale können sowohl einzeln als auch in beliebiger Kombination wesentlich für die Erfindung in ihren verschiedenen Ausführungsform sein.

### Bezugszeichenliste

- 1, 1', 1": Sensor
- 3, 3',3": Gehäuse
- 5, 5', 5": Sensorelement
- 7a, 7b: Keramikscheibe
- 7', 7a", 7b": Keramikformteil
- 9: verpresstes Pulver
- 9', 9": Glaselement
- 11': Anschlussmittel

- X: hinterer Anschlussbereich
- Y: Durchführung für Sensorelement
- Z: Anschlussmittel eingebettet im Glaselement

- 10: Sensor
- 30: Gehäuse
- 50: Sensorelement
- 70: Vergusselement
- 90: Glaselement
- 110: Anschlussmittel
- 130: Gehäuseinnenraum
- 150: Anschlussflansch
- 170: erste Öffnung
- 190: zweite Öffnung
- 210: erstes Anbauteil
- 230: zweites Anbauteil

- 1000: Verfahren zur Herstellung eines Sensors
- 1010: Bereitstellen
- 1020: Anordnen
- 1030: Erhitzen

## Patentansprüche

1. Ein Sensor (10) zur Analyse von Gasen, aufweisend:
zumindest ein Gehäuse (30) mit einem Gehäuseinnenraum (130) mit einer ersten Öffnung (170) und einer der ersten Öffnung (170) gegenüberliegenden zweiten Öffnung (190);
• zumindest ein Sensorelement (50), das zumindest teilweise in dem Gehäuseinnenraum (130) angeordnet ist, wobei das Sensorelement (50) aufweist:
zumindest einen Sensorsteifen umfassend zumindest ein Substrat; zumindest ein Messmittel angeordnet auf dem Substrat; und zumindest ein Anschlussmittel (110), wobei das Anschlussmittel (110) außerhalb des Gehäuseinnenraums (130) angeordnet ist; und
zumindest ein Glaselement (90) und zumindest ein Vergusselement (70), die in dem Gehäuseinnenraum (130) in einem Zwischenraum zwischen einer Gehäusewand im Gehäuseinnenraum (130) und dem Sensorelement (50) angeordnet sind und das Sensorelement (50) zumindest bereichsweise vollständig umgeben,
**dadurch gekennzeichnet, dass**
das Glaselement (90) an der ersten Öffnung (170) des Gehäuseinnenraums (130) in dem Gehäuseinnenraum (130) des Gehäuses (30) angeordnet ist und angepasst ist den Zwischenraum hermetisch in Richtung der ersten Öffnung (170) abzudichten, wobei das Anschlussmittel (110) nicht vom Glaselement (90) umgeben wird und wobei
das Vergusselement (70) auf dem Glaselement (90) in Richtung der zweiten Öffnung (190) angeordnet ist und angepasst ist das Sensorelement (50) in dem Gehäuseinnenraum (130) formschlüssig zu fixieren.

2. Sensor nach Anspruch 1, **dadurch gekennzeichnet, dass**
das Vergusselement (70) und das Glaselement (90) formschlüssig und/oder stoffschlüssig aneinander fixiert sind.

3. Sensor nach Anspruch 1 oder 2, **dadurch gekennzeichnet, dass** zumindest ein Endbereich/Endbereiche des Sensorelements zumindest teilweise aus der ersten Öffnung und/oder der zweiten Öffnung hinausragt/hinausragen.

4. Sensor nach einem der vorangehenden Ansprüche, **dadurch gekennzeichnet, dass** das Gehäuse (30) zumindest einen Anschlussflansch (150) umfasst.

5. Sensor nach Anspruch 4, **dadurch gekennzeichnet, dass** der Sensor (10) ein zumindest erstes Anbauteil (210) aufweist, wobei das erste Anbauteil (210) angepasst ist das Sensorelement (50) an der ersten Öffnung (170) zu umgeben, und/oder
der Sensor (10) zumindest ein zweites Anbauteil (230) aufweist, wobei das zweite Anbauteil (230) angepasst ist das Sensorelement (50) an der zweiten Öffnung (190) zu umgeben, und wobei das erste Anbauteil (210) und/oder das zweite Anbauteil (230) an dem Anschlussflansch (150) befestigt sind, insbesondere mit dem Anschlussflansch (150) verschweißt sind.

6. Sensor nach einem der vorangehenden Ansprüche, **dadurch gekennzeichnet, dass**
das Gehäuse (30) eine Metallhülse, insbesondere eine Tiefziehhülse, aufweist, bevorzugt weist die Metallhülse eine Verjüngung an der ersten Öffnung (170) auf.

7. Sensor nach einem der vorangehenden Ansprüche, **dadurch gekennzeichnet, dass**
das Gehäuse (30) eine Kobaltlegierung, insbesondere eine Nickel-Kobaltlegierung umfassend Alloy 605, aufweist, und/oder das Gehäuse (30) eine Wandstärke von 0,2mm bis 0,6mm aufweist.

8. Sensor nach einem der vorangehenden Ansprüche, **dadurch gekennzeichnet, dass**
das Glaselement (90) ein Glaslot aufweist.

9. Sensor nach einem der vorangehenden Ansprüche, **dadurch gekennzeichnet, dass**
das Vergusselement (70) einen keramischen Verguss aufweist.

10. Sensor nach einem der vorangehenden Ansprüche, **dadurch gekennzeichnet, dass**
das Vergusselement (70) einen ausdehnungsangepassten keramischen Verguss auf Aluminiumoxidbasis, aufweist.

11. Sensor nach einem der vorangehenden Ansprüche, **dadurch gekennzeichnet, dass** das Substrat ein Keramiksubstrat umfasst;
das Messmittel einen Messwiderstand umfasst.

12. Sensor nach einem der vorangehenden Ansprüche, **dadurch gekennzeichnet, dass**
der Sensor (10) angepasst ist als Gassensor, Rußsensor, Lambdasonde, Temperatursensor, Chemosensor oder Strömungssensor oder einer beliebigen Kombination dieser Sensoren und/oder als Heizelement betrieben wird.

13. Verfahren (1000) zur Herstellung eines Sensors (10) nach einem der vorherigen Ansprüche, **gekennzeichnet durch** die Schritte:
Bereitstellen (1010) zumindest eines Gehäuses (30) mit einem Gehäuseinnenraum (130) mit einer ersten Öffnung (170) und einer der ersten Öffnung (170) gegenüberliegenden zweiten Öffnung (190), zumindest ein Sensorelement (50),
zumindest ein Glaselement (90) und zumindest ein Vergusselement (70);
Anordnen (1020) eines Sensorelements (50) zumindest bereichsweise in dem Gehäuseinnenraum (130), wobei das Sensorelement (50) aufweist:
zumindest einen Sensorsteifen umfassend zumindest ein Substrat;
zumindest ein Messmittel angeordnet auf dem Substrat; und
zumindest ein Anschlussmittel (110), wobei das Anschlussmittel (110) außerhalb des Gehäuseinnenraums (130) angeordnet ist,und
Anordnen des Glaselements (90) und des Vergusselements (70) in dem Gehäuseinnenraum (130) in einem Zwischenraum zwischen einer Gehäusewand des Gehäuseinnenraums (130) und dem Sensorelement (50), so dass diese das Sensorelement (50) zumindest bereichsweise vollständig umgeben, wobei das Anschlussmittel (110) nicht vom Glaselement (90) umgeben wird; und
Erhitzen (1030) des Sensors (10) bis das Glaselement (90) an der ersten Öffnung (170) des Gehäuseinnenraums (130) den Zwischenraum hermetisch in Richtung der ersten Öffnung (150) abdichtet, und das Vergusselement (70), angeordnet auf dem Glaselement (90) in Richtung der zweiten Öffnung (190), das Sensorelement (50) in dem Gehäuseinnenraum (130) des Gehäuses (30) formschlüssig fixiert.

14. Verfahren nach Anspruch 13, **dadurch gekennzeichnet, dass**
das Erhitzen zumindest einen Brennvorgang des Sensors (10), vorzugsweise in einem Brennofen, umfasst.

15. Verfahren nach Anspruch 14, **dadurch gekennzeichnet, dass**
das Vergusselement (70) und das Glaselement (90) mittels des Brennvorgangs an das Gehäuse (30) und an das Sensorelement (50) gesintert und/oder aufgeschmolzen werden.

## Claims

1. A sensor (10) for analyzing gases, comprising:
at least one housing (30) having a housing interior (130) having a first opening (170) and a second opening (190) opposite the first opening (170);
• at least one sensor element (50) arranged at least partially in the housing interior (130), wherein the sensor element (50) comprises:
at least one sensor stiffness comprising at least one substrate; at least one measuring means arranged on the substrate; and at least one connection means (110), wherein the connection means (110) is arranged outside the housing interior (130); and
at least one glass element (90) and at least one potting element (70), which are arranged in the housing interior (130) in a space between a housing wall in the housing interior (130) and the sensor element (50) and completely surround the sensor element (50) at least in regions, **characterized in that**
the glass element (90) is arranged at the first opening (170) of the housing interior (130) in the housing interior (130) of the housing (30) and is adapted to hermetically seal the space in the direction of the first opening (170), wherein the connection means (110) is not surrounded by the glass element (90), and wherein
the potting element (70) is arranged on the glass element (90) in the direction of the second opening (190) and is adapted to fix the sensor element (50) in the housing interior (130) in a form-fitting manner.

2. The sensor according to claim 1, **characterized in that**
the potting element (70) and the glass element (90) are fixed to one another in a form-fitting and/or integrally bonded manner.

3. The sensor according to claim 1 or 2, **characterized in that** at least one end region/end regions of the sensor element project(s) at least partially out of the first opening and/or the second opening.

4. The sensor according to any one of the preceding claims, **characterized in that** the housing comprises at least one connecting flange (150).

5. The sensor according to claim 4, **characterized in that**
the sensor (10) comprises an at least first attachment (210), wherein the first attachment (210) is adapted to surround the sensor element (50) at the first opening (170), and/or the sensor (10) comprises at least a second attachment (230), wherein the second attachment (230) is adapted to surround the sensor element (50) at the second opening (190), and wherein the first attachment (210) and/or the second attachment (230) are fastened to the connecting flange (150), in particular are welded to the connecting flange (150).

6. The sensor according to any one of the preceding claims, **characterized in that** the housing (30) comprises a metal sleeve, in particular a deep-drawn sleeve, and preferably the metal sleeve comprises a taper at the first opening (170).

7. The sensor according to any one of the preceding claims, **characterized in that** the housing (30) comprises a cobalt alloy, in particular a nickel cobalt alloy comprising Alloy 605, and/or
the housing (30) has a wall thickness of 0.2mm to 0.6mm.

8. The sensor according to any one of the preceding claims, **characterized in that** the glass element (90) comprises a glass solder.

9. The sensor according to any one of the preceding claims, **characterized in that** the potting element (70) comprises a ceramic potting.

10. The sensor according to any one of the preceding claims, **characterized in that** the potting element (70) comprises an expansion-matched, aluminum-oxide-based ceramic potting.

11. The sensor according to any one of the preceding claims, **characterized in that** the substrate comprises a ceramic substrate;
the measuring means comprises a measuring resistor.

12. The sensor according to any one of the preceding claims, **characterized in that** the sensor (10) is adapted as a gas sensor, soot sensor, lambda sensor, temperature sensor, chemosensor or flow sensor or any combination of said sensors and/or is operated as a heating element.

13. A method (1000) of manufacturing a sensor (10) according to any one of the preceding claims, **characterized by** the steps of:
Providing (1010) at least one housing (30) having a housing interior (130) having a first opening (170) and a second opening (190) opposite the first opening (170), at least one sensor element (50),
at least one glass element (90) and at least one potting element (70);
arranging (1020) a sensor element (50) in the housing interior (130) at least in regions,
wherein the sensor element (50) comprises:
at least one sensor stiffness comprising at least one substrate;
at least one measuring means arranged on the substrate; and
at least one connection means (110), wherein the connection means (110) is arranged outside the housing interior (130), and
arranging the glass element (90) and the potting element (70) in the housing interior (130) in a space between a housing wall of the housing interior (130) and the sensor element (50) so that they completely surround the sensor element (50) at least in regions, wherein the connection means (110) is not surrounded by the glass element (90); and
heating (1030) the sensor (10) until the glass element (90) at the first opening (170) of the housing interior (130) hermetically seals the space in the direction of the first opening (150), and the potting element (70) arranged on the glass element (90) in the direction of the second opening (190) fixes the sensor element (50) in the housing interior (130) of the housing (30) in a form-fitting manner.

14. The method according to claim 13, **characterized in that**
the heating comprises at least one firing process of the sensor (10), preferably in a kiln.

15. The method according to claim 14, **characterized in that**
the potting element (70) and the glass element (90) are sintered and/or melted onto the housing (30) and onto the sensor element (50) by means of the firing process.

## Revendications

1. Capteur (10) d'analyse de gaz, comportant :
au moins un boîtier (30) avec un espace interne de boîtier (130) comprenant une première ouverture (170) et une deuxième ouverture (190) opposée à la première ouverture (170) ;
• au moins un élément capteur (50), qui est disposé au moins en partie dans l'espace interne de boîtier (130), dans lequel l'élément capteur (50) comporte :
au moins un raidisseur de capteur comprenant au moins un substrat ; au moins un moyen de mesure disposé sur le substrat ; et au moins un moyen de raccordement (110), dans lequel le moyen de raccordement (110) est disposé à l'extérieur de l'espace interne de boîtier (130) ; et
au moins un élément de verre (90) et au moins un élément de moulage (70), qui sont disposés dans l'espace interne de boîtier (130) dans un espace intermédiaire entre une paroi de boîtier dans l'espace interne de boîtier (130) et l'élément capteur (50) et
entourent l'élément capteur (50) au moins par zones totalement, **caractérisé en ce que** l'élément de verre (90) est disposé au niveau de la première ouverture (170) de l'espace interne de boîtier (130) dans l'espace interne de boîtier (130) du boîtier (30) et est apte à étanchéifier l'espace intermédiaire de manière hermétique en direction de la première ouverture (170), dans lequel le moyen de raccordement (110) n'entoure pas l'élément de verre (90) et dans lequel
l'élément de moulage (70) est disposé sur l'élément de verre (90) en direction de la deuxième ouverture (190) et est apte à fixer l'élément capteur (50) dans l'espace interne de boîtier (130) par complémentarité de formes.

2. Capteur selon la revendication 1, **caractérisé en ce que**
l'élément de moulage (70) et l'élément de verre (90) sont fixés l'un à l'autre par complémentarité de formes et/ou par complémentarité de matières.

3. Capteur selon la revendication 1 ou 2, **caractérisé en ce que** au moins une zone d'extrémité/plusieurs zones d'extrémité de l'élément capteur fait saillie/font saillie hors de la première ouverture et/ou de la deuxième ouverture.

4. Capteur selon l'une quelconque des revendications précédentes, **caractérisé en ce que** le boîtier (30) comprend au moins une bride de raccordement (150).

5. Capteur selon la revendication 4, **caractérisé en ce que**
le capteur (10) comporte au moins une première pièce de montage (210), dans lequel la première pièce de montage (210) est apte à entourer l'élément capteur (50) au niveau de la première ouverture (170) et/ou
le capteur (10) comporte au moins une deuxième pièce de montage (230), dans lequel la deuxième pièce de montage (230) est apte à entourer l'élément capteur (50) au niveau du deuxième ouverture (190) et dans lequel la première pièce de montage (210) et/ou la deuxième pièce de montage (230) sont fixés à la bride de raccordement (150), en particulier sont soudés à la bride de raccordement (150).

6. Capteur selon l'une quelconque des revendications précédentes, **caractérisé en ce que** le boîtier (30) comporte une douille métallique, en particulier une douille emboutie, de préférence la douille métallique comporte un effilement au niveau de la première ouverture (170).

7. Capteur selon l'une quelconque des revendications précédentes, **caractérisé en ce que** le boîtier (30) comporte un alliage de cobalt, en particulier un alliage de nickel comprenant cobalt 605 et/ou
le boîtier (30) comporte une épaisseur de paroi de 0,2 mm à 0,6 mm.

8. Capteur selon l'une quelconque des revendications précédentes, **caractérisé en ce que** l'élément de verre (90) comporte une brasure de verre.

9. Capteur selon l'une quelconque des revendications précédentes, **caractérisé en ce que** l'élément de moulage (70) comporte un moulage céramique.

10. Capteur selon l'une quelconque des revendications précédentes, **caractérisé en ce que** l'élément de moulage (70) comporte un moulage céramique adapté à la dilatation à base d'oxyde d'aluminium.

11. Capteur selon l'une quelconque des revendications précédentes, **caractérisé en ce que** le substrat comprend un substrat en céramique ;
le moyen de mesure comprend une résistance de mesure.

12. Capteur selon l'une quelconque des revendications précédentes, **caractérisé en ce que** le capteur (10) est apte à servir de capteur de gaz, capteur de suie, une sonde lambda, un capteur de température, un capteur chimique ou un capteur d'écoulement ou une quelconque combinaison de ces capteurs et/ou d'élément chauffant.

13. Procédé (1000) pour la fabrication d'un capteur (10) selon l'une quelconque des revendications précédentes, **caractérisé par** les étapes de :
mise à disposition (1010) d'au moins un boîtier (30) avec un espace interne de boîtier (130) comprenant une première ouverture (170) et une deuxième ouverture (190) opposée à la première ouverture (170), au moins un élément capteur (50),
au moins un élément de verre (90) et au moins un élément de moulage (70) ;
agencement (1020) d'un élément capteur (50), qui est disposé au moins en partie dans l'espace interne de boîtier (130), dans lequel l'élément capteur (50) comporte :
au moins un raidisseur de capteur comprenant au moins un substrat ; au moins un moyen de mesure disposé sur le substrat ; et
au moins un moyen de raccordement (110), dans lequel le moyen de raccordement (110) est disposé en dehors de l'espace interne de boîtier (130) et
agencement de l'élément de verre (90) et de l'élément de moulage (70) dans l'espace interne de boîtier (130) dans un espace intermédiaire entre une paroi de boîtier de l'espace interne de boîtier (130) et l'élément capteur (50), de sorte à entourer au moins par endroits l'élément capteur (50), dans lequel le moyen de raccordement (110) n'est pas entouré par l'élément de verre (90) ; et
chauffage (1030) du capteur (10) jusqu'à ce que l'élément de verre (90) réalise l'étanchéité au niveau de la première ouverture (170) de l'espace interne de boîtier (130) de l'espace intermédiaire de manière hermétique en direction de la première ouverture (150) et l'élément de moulage (70), disposé sur l'élément de verre (90) en direction de la deuxième ouverture (190), fixe l'élément capteur (50) dans l'espace interne de boîtier (130) du boîtier (30) par complémentarité de formes.

14. Procédé selon la revendication 13, **caractérisé en ce que**
le chauffage comprend au moins un processus de combustion du capteur (10), de préférence dans un four.

15. Procédé selon la revendication 14, **caractérisé en ce que**
l'élément de moulage (70) et l'élément de verre (90) sont frittés et/ou fondus au moyen du processus de combustion sur le boîtier (30) et sur l'élément capteur (50).
